# EUROPEAN PATENT APPLICATION

(11) **EP 1 270 137 A1**
(43) Date of publication of application: **02.01.2003**
(21) Application number: 02291518.5
(22) Date of filing: 18.06.2002
(51) Int. Cl.: B23K 13/01, B23K 13/02, B21C 37/08

(54) **Squeeze roll cleaning mechanism**

(30) Priority: 20.06.2001 JP 2001187027
(71) Applicant: MITSUBISHI SHINDOH CO., LTD., Chuo-ku, Tokyo (JP)
(72) Inventor: Kazama, Takashi, c/o Mitsubishi Shindoh Co.,Ltd, Aizuwakamatsu-shi, Fukushima (JP); Ozaki, Kazunori, c/o Mitsubishi Shindoh Co.,Ltd, Aizuwakamatsu-shi, Fukushima (JP)
(74) Representative: Ilgart, Jean-Christophe

(57) **Abstract**

By pressing a wiping member (37) of a wiper (33) onto a concave curved surface (28) and an upper side flange portion (30) of a squeeze roll (8), spatter is wiped off by the rotation of the squeeze roll (8). In the wiper (33), the wiping member (37) is fixed to a base plate (36) that is linked via a rotatable arm (35) to a shaft body (34). The wiping member (37) is formed from flannel and an anchor member (39) is provided on the base plate (36) on which the wiping member (37) is fixed. The anchor members (39) of a pair of squeeze rolls (8) are linked under tension by a coil spring (40) so as to press the wiping members (37) against the concave curved surfaces (28). A cooling tube (42) for discharging cooling water is provided to the rear of the squeeze roll (8) in the rotation direction of the squeeze roll (8).

## Description

### BACKGROUND OF THE INVENTION

### Field of the Invention

The present invention relates to a squeeze roll cleaning mechanism used in an electro-resistance-welded tube manufacturing apparatus for curling a strip into a tube shape and heat welding both edges thereof using squeeze rolls.

### Description of the Related Art

Conventionally, electro-resistance-welded tubes that are used for hot water supply tubes and cold water supply tubes or for heat exchange tubes in air conditioners or refrigerators or the like are formed into a tube shape by curling a strip into a rounded shape as it is being fed along. The strip used in this case is a belt of metal formed from copper or brass or the like. A tube is then formed by continuously welding both edges of the tube shaped material as it is fed along using a welding means provided by a high frequency dielectric welder or a high frequency resistance welder or the like.

During welding, the two edges of a strip that has been curled into a C shape are heated by a high frequency induction welder or the like that includes, for example, a work coil such as an induction heating coil and a ferrite core so that joule heat is generated that is concentrated in the two edges. As the strip, which has been curled into a C shape, passes between a pair of squeeze rolls, the two heated edges are pressed and butt welded together so as to form a tube shape.

When the two edges of the C shaped strip that have been heated by a work coil or the like are pressed by the pair of squeeze rolls and heat welded, spatter is generated from the weld portion and is scattered on the inside and outside of the electro-resistance-welded tube that has been manufactured. In particular, when the material of the electro-resistance-welded tube is brass, more spatter is generated than when other materials are used.

If spatter that is scattered from the weld portion to the outside of the electro-resistance-welded tube adheres to the concave curved surface or the like of a squeeze roll that butts together the two edges of the strip, when the strip that is being continuously supplied is heat welded by the rotating squeeze rolls, the spatter on the concave curved surface or the like is transferred to the outer surface of the electro-resistance-welded tube and baked onto this outer surface, creating the problem of causing a deterioration in the quality of the electro-resistance-welded tube.

In order to prevent this problem, it has been necessary each time to stop the operation of the electro-resistance-welded tube production line and to remove the spatter by wiping the surface of the concave curved surface and the like of the squeeze rolls, which has had an extremely deleterious effect on production efficiency.

The present invention was conceived in view of the above circumstances and it is an object thereof to provide an electro-resistance-welded tube squeeze roll cleaning mechanism that enables the surface of a squeeze roll to be cleaned efficiently.

### SUMMARY OF THE INVENTION

The squeeze roll cleaning mechanism for a squeeze roll of an electro-resistance-welded tube of the present invention is a cleaning mechanism, wherein in a manufacturing apparatus for manufacturing an electro-resistance-welded tube by curling a moving strip into a tube shape, passing the strip between side surfaces of a pair of rotatable squeeze rolls and heat welding two edges of the strip, a wiping member is placed in contact with a side surface of the squeeze roll that makes contact with the electro-resistance-welded tube.

A strip that has been curled into a C shape is passed between a pair of squeeze rolls. When the two heated edges thereof are pressed together and butt welded by the squeeze rolls, spatter is generated in the weld portion and is scattered outwards so as to adhere to the side surface of the squeeze rolls and the like. In this case, by placing a wiping member in contact with the side surface of the rotating squeeze rolls, spatter that has adhered to the side surfaces and the like can be wiped off so that when the side surface of each squeeze roll is next placed in contact with the strip by the rotation, because the spatter has been removed the spatter can be prevented from adhering to the surface of the heat welded electro-resistance-welded tube. Moreover, the surfaces of the squeeze rolls can be cleaned without the electro-resistance-welded tube production line having to be stopped.

It is preferable that a highly pliable, highly heat resistant, and highly wear resistant fiber material be used as the wiping member. As a result of the wiping member being in close contact with and sliding relatively against the side surface of the rotating squeeze roll, spatter can reliably be wiped off the surface of the squeeze roll.

It is also possible for a cooling fluid supply member to be provided for discharging cooling fluid onto the squeeze roll.

By discharging cooling fluid onto the squeeze rolls so as to cool them, heating of the squeeze rolls and wiping means by a heating means such as a work coil is suppressed and these can have an extended lifespan. In addition, spatter adhering to the surface of the squeeze roll can be easily washed off and removed. Note that, at this time the cooling fluid must not touch the weld portion of the electro-resistance-welded tube.

It is preferable that a liquid such as water is used as the cooling fluid. If water is used then not only is it difficult for the fluid to touch the weld portion of the electro-resistance-welded tube, but because it forms a film of fluid on the surface of the squeeze roll, traces of rubbing can be prevented when the moving electro-resistance-welded tube is in contact with the squeeze rolls.

It is also possible for an aperture of the cooling fluid supply member to be positioned rearward of the wiping member in the rotation direction of the squeeze roll and forward of a portion of the squeeze roll that is in contact with the electro-resistance-welded tube in the rotation direction of the squeeze roll.

By supplying cooling fluid to the rotating squeeze rolls and washing off spatter adhering to the surface thereof and then wiping the surface clean with the wiping member after it has been wetted by the cooling fluid, spatter can be easily removed. This allows the surface of each squeeze roll from which the spatter has been removed to then rotate further and again come into contact with and heat weld the strip, and thereby continuously manufacture a high quality electro-resistance-welded tube with no spatter adhesion.

It is also possible for the wiping member to be pressed elastically against a side surface of the squeeze roll.

By elastically pressing the wiping member, spatter adhering to the surface of the squeeze roll can be reliably wiped off.

It is also possible for a wiping member to be provided for each one of a pair of squeeze rolls and for these wiping members to be pressed against the side surfaces of each of the squeeze rolls as a result of being linked together by an elastic member.

In this case, two wiping members can be pressed against the squeeze rolls by one elastic member enabling the number of parts to be reduced.

### BRIEF DESCRIPTION OF THE DRAWINGS

Fig. 1 is a schematic structural diagram showing a production line for an electro-resistance-welded tube manufacturing apparatus according to an embodiment of the present invention.

Fig. 2 is a plan view of a squeeze roll cleaning mechanism.

Fig. 3 is a vertical cross sectional view of the main portions of the squeeze roll cleaning mechanism shown in Fig. 2.

### DESCRIPTION OF THE PREFERRED EMBODIMENTS

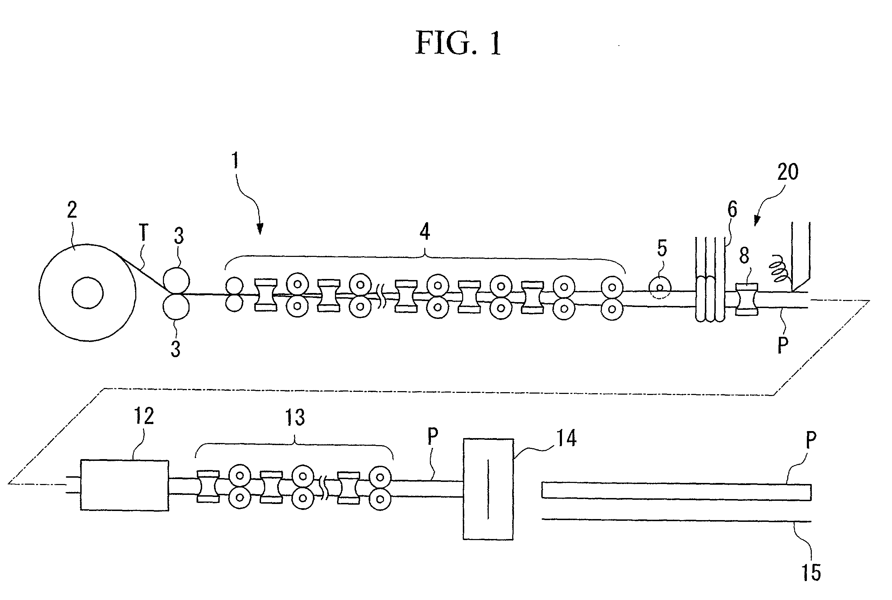

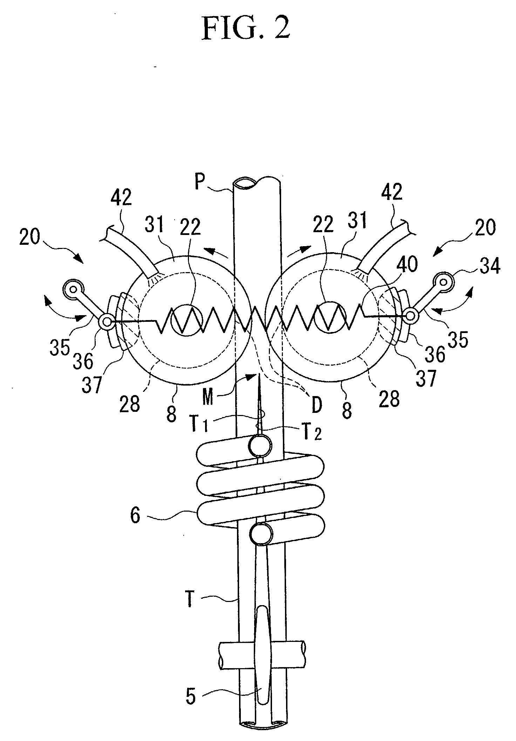

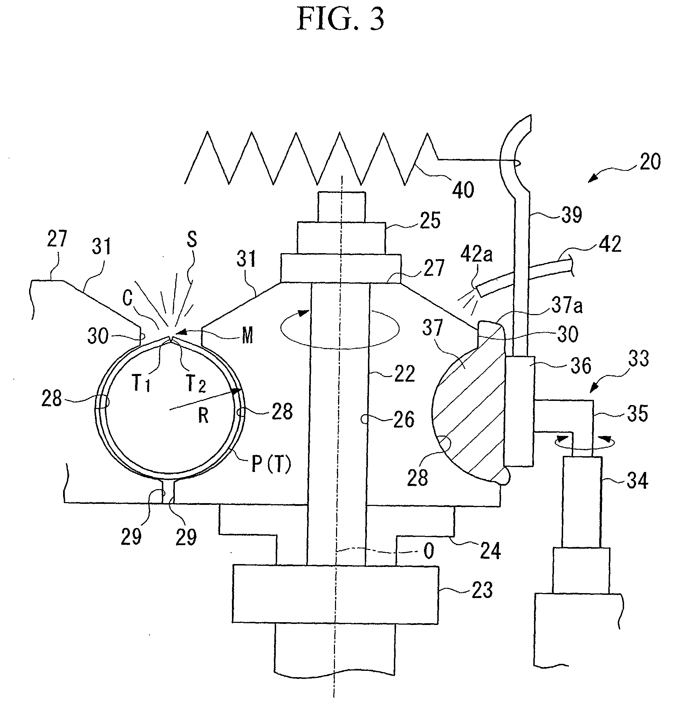

The electro-resistance-welded tube manufacturing apparatus according to an embodiment of the present invention will now be described with reference to Figs. 1 through 3. Fig. 1 is a schematic structural diagram showing a production line for an electro-resistance-welded tube manufacturing apparatus; Fig. 2 is a plan view showing the main portions of a squeeze roll cleaning mechanism of the manufacturing apparatus shown in Fig. 1; Fig. 3 is a vertical cross sectional view of the main portions of the squeeze roll cleaning mechanism shown in Fig. 2.

The electro-resistance-welded tube according to the present embodiment is a simple metal tube having a smooth internal surface and is used as a hot water supply tube, a cold water supply tube, or the like, however, the present invention may also be applied to any metal tube such as a metal tube that has irregular structures formed on the external surface of the tube or that has grooves formed on the internal surface of the tube and is used in refrigerators or air-conditioning equipment. Moreover, the material from which the electro-resistance-welded tube according to the present embodiment is formed is brass, however, the present invention may also be applied to copper tubes, aluminum tubes, or metal tubes formed from some other material.

In the manufacturing apparatus 1 for manufacturing an electro-resistance-welded tube (referred to below simply as a "tube") shown in Fig. 1, a strip T in the form of a continuous belt having a constant width that is formed from a belt of metal such as brass is continuously fed out from an uncoiler 2. The fed out strip T passes through a pair of pressing rolls 3 and then through a plurality of pairs of forming rolls 4 arranged in a row. The strip T is thus gradually rounded into the shape of a C. Once the amount of the gap between the two edges of the strip T that are to be butted together by a rolling separator 5 is made constant, the strip T is passed through a work coil of an induction heating section, for example, through an induction heating coil 6.

The induction heating coil 6 heats the strip T that has been rounded into a C shape and generates joule heat concentrated in both edges. When the strip T passes through a pair of squeeze rolls 8 and 8, as is shown in Fig. 2, the two heated edges T1 and T2 are pressed together and butt welded to form a weld portion M. On the internal and external surfaces of the tube P formed by the welding of the strip T, internal and external surface beads are formed from fused material extruded from the welded portion. These are removed by cutting apparatuses.

After the tube P has passed through a cooling tank 12 and been forcibly cooled, it is shrunk to a predetermined external diameter by being passed through a plurality of pairs of sizing rolls 13 arranged in a row. After the tube P has been shaped by a shaping roll (not shown) it is cut into predetermined lengths, for example, 4 to 6 meters by a cutting apparatus 14 and the cut tubes are then stacked on a stock table 15.

A detailed description will now be given using Figs. 2 and 3 of a cleaning mechanism 20 for squeeze rolls 8 and 8 according to the present embodiment in the electro-resistance-welded tube manufacturing apparatus 1 having the above described schematic structure.

As is shown in Fig. 2, a pair of squeeze rolls 8 and 8 are provided sandwiching the strip T and aligned in a direction substantially orthogonal to the direction in which the strip T is transported and a cleaning mechanism 20 is provided in each squeeze roll 8.

Each squeeze roll 8 has the vertical cross sectional configuration shown in Fig. 3. Each squeeze roll 8 is fixed in place by a rotation shaft 22 provided in the rotation center of the squeezer roll. The rotation shaft 22 is rotatably supported via bearings in a holding mechanism (not shown). The squeeze roll 8 and the rotation shaft 22 can be made to rotate integrally by, for example, fitting a key together with a key groove. By selecting a spacer 24 of a predetermined thickness as appropriate to insert between an upper wide diameter portion 23 formed integrally with the rotation shaft 22 and the squeeze roll 8, it is possible to set the height of the squeeze roll 8 to an appropriate height. By tightening a nut 25 on the top of each squeeze roll 8, the squeeze roll 8 is supported on the rotation shaft 22 between the spacer 24 and the nut 25.

Each squeeze roll 8 is formed substantially in a disk shape and has a center hole 26 into which the rotation shaft 22 is fitted penetrating the central portion of the squeeze roll 8 in the vertical direction. Around the entire circumference of the side surface in the thickness direction of the squeeze roll 8, a concave curved surface 28 having a substantially arc shaped configuration whose vertical cross section has the radius R is formed around the entire periphery centering on the rotation shaft 22. The surface of the concave curved surface 28 may be, for example, a mirror finished surface and a lubricant such as a water soluble oil may be coated on this surface. A lower side flange portion 29 whose outer surface is formed substantially in a circular cylinder configuration is formed below the bottom end of the concave curved surface 28. An upper side flange portion 30 whose outer surface is formed substantially in a circular cylinder configuration having a predetermined thickness c is formed above the top end of the concave curved surface 28.

A substantially truncated cone shaped tapered surface 31 is formed sloping upwards from the top end of the upper side flange portion 30 towards a top surface 27 in which the center hole 26 is formed. With the center axis of the rotation shaft 22, namely, the center of rotation of the squeeze roll 8 taken as O, the angle of inclination of the tapered surface 31 may be set to an appropriate acute angle.

The distance from the rotation center line O of each squeeze roll 8 to the upper side flange portion 30 is set so as to be shorter than the distance from the rotation center line O to the lower side flange portion 29. As a result, when the squeeze rolls 8 and 8 are positioned opposite each other when welding the strip T, the gap C between the pair of upper side flange portions 30 and 30 is larger than the gap between the pair of lower side flange portions 29 and 29. Therefore, spatter s that is generated in the weld portion M of the two edges T1 and T2 of the electro-resistance-welded tube P (i.e., the strip T) that protrudes into the gap C tends to be scattered peripherally.

A description will now be given of the cleaning mechanism 20 of the squeeze rolls 8 and 8. In the concave curved surface 28 of each squeeze roll 8, a wiper (i.e., a cleaning means) 33 is provided in an area other than an area D that is in contact with the electro-resistance-welded tube P, for example, in an area on substantially the opposite side therefrom. The wiper 33 is provided with an arm 35 that may be formed, for example, substantially in an L shape and that is able to rotate in a horizontal direction. The arm 35 is provided on a shaft body 34 that is supported on a base of the manufacturing apparatus 1 for the electro-resistance-welded tube P. A pliable wiping member 37 is fixed to a base plate 36 provided at the other end of the arm 35.

The wiping member 37 is formed from a pliable fiber material such as flannel, for example, and presses against the entire width in the height direction of the concave curved surface 28 of the rotating squeeze roll 8 so as to wipe off foreign matter such as spatter s that is adhered thereto. The material used for the wiping member 37 is not limited to a fiber material and any suitable material may be employed such as rubber or plastic. Namely, it is desirable that the material have sufficient pliability to be able to be pressed into close contact with the concave curved surfaces 28 and wipe off spatter without leaving traces of rubbing, and additionally have heat resistance to heats from the work coil and wear resistance when wiping off foreign matter from the rotating squeeze roll.

The wiping member 37 not only wipes off spatter s that has adhered to the concave curved surface 28 but is also provided with a protrusion 37a that is in close contact with the upper side flange portion 30 of the squeeze roll 8 and wipes off spatter s that has adhered thereto. The base plate 36 of the wiper 33 is preferably formed with a substantially arc shaped configuration that matches the peripheral surface of the squeeze roll 8. It is also desirable that the wiping member 37 is formed with a substantially arc shaped configuration matching the base plate 36 and concave curved surface 28.

An anchor member 39 extends upwards from the base plate 36. By linking this anchor member 39 with an anchor member 39 of a cleaning mechanism 20 having the same structure provided on the other squeeze roll 8 via an elastic member such as, for example, a tensioned coil spring 40, each wiping member 37 can be held in a state of being pressed against the respective squeeze roll 8.

Moreover, in each squeeze roll 8, a cooling tube 42 is provided as a cooling fluid supply means. When looking the rotation direction of the squeeze roll 8, the cooling tube 42 is provided to the rear in the rotation direction of the wiping member 37 provided in the wiper 33 and to the front in the rotation direction of the contact area D where the wiping member 37 is in contact with the electro-resistance-welded tube P. The cooling tube 42 is provided with an aperture portion 42a for discharging cooling fluid onto a top portion of the tapered surface 31 of the squeeze roll 8. Cooling water, for example, serving as a cooling medium is supplied from a cooling fluid supply source (not shown) and is discharged, for example, onto the tapered surface 31 of the squeeze roll 8. In particular, the surfaces of the upper side flange portion 30 and the concave curved surface 28 and the like are cooled and at least a portion of the spatter s that has adhered thereto is washed off.

In this case, the aperture 42a needs to be positioned such that cooling water is not discharged onto the weld portion M of the electro-resistance-welded tube P. The cooling medium is not limited to water and other fluids or gases may be used. However, because there is a fear that a gas may spread out and cool the weld portion M so as to have an adverse effect on the weld, it is preferable that a liquid such as water is used.

The cleaning mechanism 20 for a squeeze roll of an electro-resistance-welded tube P according to the present embodiment has the above described structure. Next, a description will be given of the operation thereof.

In the manufacturing apparatus 1 for an electro-resistance-welded tube P shown in Fig. 1, a strip T formed from brass, for example, is continuously fed out from an uncoiler 2. The fed out strip T passes through forming rolls 4 and is gradually curled into the shape of a C. The strip T is then passed through the induction heating coil 6 of an induction heating section. When the strip T that has been heated by the induction heating coil 6 passes through the pair of squeeze rolls 8 and 8, the two heated edges T1 and T2 are pressed together and butt welded.

As is shown in Figs. 2 and 3, when the two edges of the strip T that has been curled into the shape of a C between the concave curved surfaces 28 and 28 of the pair of squeeze rolls 8 and 8 are butted together and heat welded, the two edges T1 and T2 of the strip T that has been curled into a C shape are pressed by the concave curved surfaces and are butted together so as to protrude into the predetermined gap C formed between the upper side flange portions 30 and 30 and are heat welded to form the weld portion M. Spatter s from the weld portion M generated during welding is scattered peripherally and adheres to the concave curved surfaces 28 and the upper side flange portions 30 above the concave curved surfaces 28 of the squeeze rolls 8 and 8 in the vicinity of the weld portion M.

Next, while pushing the welded electro-resistance-welded tube P in the transport direction, the squeeze rolls 8 and 8 rotate in the same direction as the electro-resistance-welded tube P (and in the opposite rotation direction to each other). Cooling water that is discharged from the aperture 42a of the cooling tube 42 is sprayed onto each squeeze roll 8 and cools each squeeze roll 8. At the same time, a portion of the spatter s that is adhered to the concave curved surfaces 28 and the upper side flange portions 30 is washed away by the cooling water. The portion that cannot be washed away still absorbs water so that it becomes easy to remove.

Furthermore, as each squeeze rolls 8 is rotated, it slides against the wiping member 37 of the wiper 33 that is pressed against the concave curved surface 28 and the upper side flange portion 30. As a result, spatter s and other dirt that is adhered to the concave curved surfaces 28 and the upper side flange portions 30 is wiped off. At the same time, moisture that has been discharged onto the concave curved surface 28 and the upper side flange portion 30 and the like can also be wiped off by the wiping member 37.

The squeeze rolls 8 and 8 that continue to rotate with the spatter s and the like removed from the concave curved surfaces 28 and upper side flange portions 30 and the like as described above make contact with a newly transported portion of the C shaped strip T. The squeeze rolls 8 and 8 thereby butt weld together the two edges T1 and T2 thereof, thereby continuously manufacturing the electro-resistance-welded tube P. A slight film of water remains on the surface of each concave curved surface 28 from which moisture has been wiped by the wiping member 37. When the squeeze roll 8 comes into contact with a newly transported portion of the C shaped strip T, even if the speed of motion of the strip T is different from the circumferential speed of the squeeze roll 8, this film of water prevents traces of rubbing being formed on any of the two.

As has been described above, according to the present embodiment, because spatter s generated during welding of the electro-resistance-welded tube P can be removed from a rotating squeeze roll 8 using the wiper 33 and continuous welding of the electro-resistance-welded tube P can be performed, it is possible to continuously manufacture a high quality electro-resistance-welded tube P with no spatter s transferred or adhering to the surface thereof. Moreover, by supplying cooling water to the squeeze rolls 8, not only is it possible to prevent overheating of the squeeze roll 8 or damage and deformation of the squeeze roll 8 from heating, but a portion of the spatter s adhering to the concave curved surface 28 and the upper side flange portions 30 and the like can be washed off. Furthermore, not only can this cooling water also be removed by the wiping member 37, but as a result of a film of water being left on the concave curved surface 28 and the upper side flange portion 30 and the like after these have gone past the wiping member 37, traces of rubbing being generated on the electro-resistance-welded tube P and the squeeze rolls 8 during welding can be prevented.

In the present embodiment, in the cleaning mechanism 20, the pair of wipers 33 and 33 are pressed simultaneously against the squeeze rolls 8 and 8 by the coil spring 40, however, it is also possible for these to be pressed individually. In this case, it is sufficient if, for example, the rotatable arm 35 of the wiper 33 is urged in a direction in which the wiping member 37 is in contact with the concave curved surface 28.

The mounting position of the wiper 33 is not limited to a position opposite the abutment area D where the squeeze roll 8 is in contact with the electro-resistance-welded tube P, and another suitable position such as, for example, to the rear in the rotation direction of the squeeze roll 8 and adjacent to the abutment area D where the squeeze roll 8 is in contact with the electro-resistance-welded tube P.

Further, in the above described embodiment, the aperture 42a of the cooling tube 42 is provided to the rear of the wiper 33 in the rotation direction of the squeeze roll 8, however, the present embodiment is not limited to this and the aperture 42a may also be positioned to the front of the wiper 33 in the rotation direction and to the rear in the rotation direction of the area where the squeeze roll 8 is in contact with the electro-resistance-welded tube P. In this case, the concave curved surface 28 and the like of the squeeze roll 8 onto which cooling water has been discharged makes contact with the electro-resistance-welded tube P (i.e., the strip T) without the cooling water being wiped off the concave curved surface 28 and the like, however, provided that the cooling water does not touch the weld portion M there are few adverse effects on the welding.

In the electro-resistance-welded tube squeeze roll cleaning mechanism of the present invention, because a wiping member is placed in contact with a side surface of a squeeze roll that makes contact with an electro-resistance-welded tube, spatter that adheres to the squeeze roll side surface during welding can be removed before it makes contact with the electro-resistance-welded tube, enabling the spatter to be prevented from adhering to the electro-resistance-welded tube being welded. In addition, without stopping the operation of the manufacturing apparatus including the squeeze rolls it is possible to clean the surface of the squeeze rolls and continuously manufacture a high quality electro-resistance-welded tube.

Moreover, because a cooling fluid supply member is provided that discharges cooling fluid onto the squeeze rolls, the squeeze roll and wiping member can be cooled from the heating needed for the welding so that they can be prevented from overheating and have an extended lifespan. In addition, spatter and the like adhering to the surface of the squeeze roll can be removed.

Furthermore, because the cooling fluid supply member is positioned to the rear of the wiping member in the rotation direction of the squeeze roll and to the front of the contact portion where the squeeze roll is in contact with the electro-resistance-welded tube, after the cooling water has removed a portion of the spatter as it cools the squeeze roll, the remaining moisture and spatter can be wiped off.

Because the wiping members are pressed elastically against the circumferential surface of the squeeze rolls, spatter adhering to the surface of the squeeze rolls can be reliably removed.

Moreover, because a wiping member is provided for each one of the pair of squeeze rolls and these wiping members are pressed against the side surfaces of the squeeze rolls as a result of being linked together by an elastic member, two wiping members can be pressed against the squeeze rolls by one elastic member enabling the number of parts to be reduced.

## Claims

1. A squeeze roll cleaning mechanism for a squeeze roll of an electro-resistance-welded tube, wherein
in a manufacturing apparatus for manufacturing an electro-resistance-welded tube by curling a moving strip into a tube shape, passing the strip between side surfaces of a pair of rotatable squeeze rolls and heat welding two edges of the strip, a wiping member is placed in contact with a side surface of the squeeze roll that makes contact with the electro-resistance-welded tube.

2. A squeeze roll cleaning mechanism according to claim 1, wherein there is provided a cooling fluid supply member which discharges cooling fluid onto the squeeze roll.

3. A squeeze roll cleaning mechanism according to claim 1, wherein an aperture of the cooling fluid supply member is positioned rearward of the wiping member in the rotation direction of the squeeze roll and forward of a portion of the squeeze roll that is in contact with the electro-resistance-welded tube in the rotation direction of the squeeze roll.

4. A squeeze roll cleaning mechanism according to claim 1, wherein the wiping member is pressed elastically against a side surface of the squeeze roll.

5. A squeeze roll cleaning mechanism according to claim 1, wherein a wiping member is provided for each one of a pair of squeeze rolls and these wiping members are pressed against the side surfaces of each of the squeeze rolls as a result of being linked together by an elastic member.
